Europäisches Patentamt

European Patent Office

Office européen des brevets

(11) Veröffentlichungsnummer: **0 357 986**
**A2**

(12) # EUROPÄISCHE PATENTANMELDUNG

(21) Anmeldenummer: **89114773.8**

(51) Int. Cl.⁵: **B41F 33/00**

(22) Anmeldetag: **10.08.89**

(30) Priorität: **09.09.88 DE 3830731**

(43) Veröffentlichungstag der Anmeldung:
**14.03.90 Patentblatt 90/11**

(84) Benannte Vertragsstaaten:
**CH DE FR GB IT LI SE**

(71) Anmelder: **Heidelberger Druckmaschinen Aktiengesellschaft**
**Kurfürsten-Anlage 52-60 Postfach 10 29 40**
**D-6900 Heidelberg 1(DE)**

(72) Erfinder: **Kipphan, Helmut, Prof.-Dr.**
**Bibiena-Strasse 6**
**D-6830 Schwetzingen(DE)**
Erfinder: **Löffler, Gerhard**
**Kiefernweg 3**
**D-6909 Walldorf(DE)**

(74) Vertreter: **Stoltenberg, Baldo Heinz-Herbert et al**
**c/o Heidelberger Druckmaschinen AG**
**Kurfürsten-Anlage 52-60**
**D-6900 Heidelberg 1(DE)**

(54) **Vorrichtung zur Farbmessung.**

(57) Bei einer Vorrichtung zur Farbmessung für den Offsetdruck, wobei an einer eine auszumessende Vorlage überspannenden Brücke eine Farbmeßeinrichtung beweglich angeordnet ist, umfaßt die Farbmeßeinrichtung einen Dreifarben-Simultan-Meßkopf für die densitometrische Messung und einen weiteren Dreifarben-Simultan-Meßkopf für die farbmetrische Messung oder einen Simultan-Meßkopf mit sechs opto-elektrischen Wandlern, in deren Strahlengängen drei Farbfilter für die densitometrische und drei weitere Farbfilter für die farbmetrische Messung angeordnet sind.

Fig.2

## Vorrichtung zur Farbmessung

Die Erfindung betrifft eine Vorrichtung zur Farbmessung für den Offsetdruck, wobei an einer eine auszumessende Vorlage überspannenden Brücke eine Farbmeßeinrichtung beweglich angeordnet ist.

Zum Ausmessen der auf einem Druckbogen mitgedruckten Farbmeßfelder eines Druckkontrollstreifens sind verschiedene Farbmeßverfahren bekannt. Am umfassendsten ist eine Farbmessung nach dem Spektralverfahren, beispielsweise nach DIN 5033, Teil 4, bei dem innerhalb eines vorgeschriebenen Wellenlängenbereichs von 380 nm bis 780 nm 20 bis 80 Meßwerte je nach Genauigkeitsanforderungen für jedes Meßfeld erfaßt werden. Aus dem somit gemessenen Spektralverlauf können sowohl die erforderlichen Farbkoordinaten für den gewählten Farbenraum als auch die notwendigen Farbdichten rechnerisch durch Bewertung mit Spektralwertkurven und durch Bewertung mit gewählten Farbfilterkurven ermittelt werden. Das Spektralverfahren erfordert jedoch einen erheblichen Aufwand. Zum einen ist die erforderliche Zerlegung in die einzelnen Wellenlängenbereiche aufwendig. Zum anderen ist eine umfangreiche Verarbeitung der durch die Messung gewonnenen Daten erforderlich.

Zur Ermittlung von Farbdichten sind relativ preisgünstige Meßverfahren und -geräte bekannt. Weiterhin sind einfache Geräte für das sogenannte Dreibereichsverfahren bekannt, bei welchen nach Normspektralwertkurven, beispielsweise nach DIN 5033, Teil 6, Werte für jeweils drei Farbkoordinaten gemessen werden.

Ausgehend von diesem Stand der Technik ist es Aufgabe der Erfindung, eine Vorrichtung zur Farbmessung zu schaffen, die die erforderlichen Meßwerte zur wahlweisen Durchführung von Farbsteuer- bzw. Farbregelverfahren nach farbmetrischen Koordinaten und/oder Farbdichten kostengünstiger und schneller erfaßt.

Eine erste erfindungsgemäße Vorrichtung ist dadurch gekennzeichnet, daß die Farbmeßeinrichtung einen Dreifarben-Simultan-Meßkopf für die densitometrische Messung und einen weiteren Dreifarben-Simultan-Meßkopf für die farbmetrische Messung umfaßt. Diese Weiterbildung hat den Vorteil, daß im wesentlichen bekannte Farbmeßköpfe verwendet werden können.

Eine zweite erfindungsgemäße Vorrichtung besteht darin, daß die Farbmeßeinrichtung einen Simultan-Meßkopf umfaßt mit sechs opto-elektrischen Wandlern, in deren Strahlengängen drei Farbfilter für die densitometrische und drei weitere Farbfilter für die farbmetrische Messung angeordnet sind. Diese Weiterbildung bedeutet eine weitere Verringerung des Aufwands.

Ausführungsbeispiele der Erfindung sind in der Zeichnung anhand mehrerer Figuren dargestellt und in der nachfolgenden Beschreibung näher erläutert. Es zeigt:

Fig. 1 spektrale Empfindlichkeitskurven bei der erfindungsgemäßen Vorrichtung für eine densitometrische und eine farbmetrische Messung,

Fig. 2 und Fig. 3 eine an sich bekannte Einrichtung zur Auswertung eines gedruckten Farbmeßstreifens, die um einen zweiten Meßkopf ergänzt ist,

Fig. 4 eine schematische Darstellung eines Ausführungsbeispiels und

Fig. 5 eine an sich bekannte Ausführungsform eines Dreifarben-Simultan-Meßkopfes für die densitometrische Messung.

Gleiche Teile sind in den Figuren mit gleichen Bezugszeichen versehen.

Fig. 1a) zeigt die zur densitometrischen Messung erforderlichen Durchlaßkurven der Farbfilter für vorgegebene Druckfarben M, C und Y. In bekannten Meßköpfen zur densitometrischen Messung werden die in Fig. 1a) gezeigten Kurven durch entsprechende Filter realisiert.

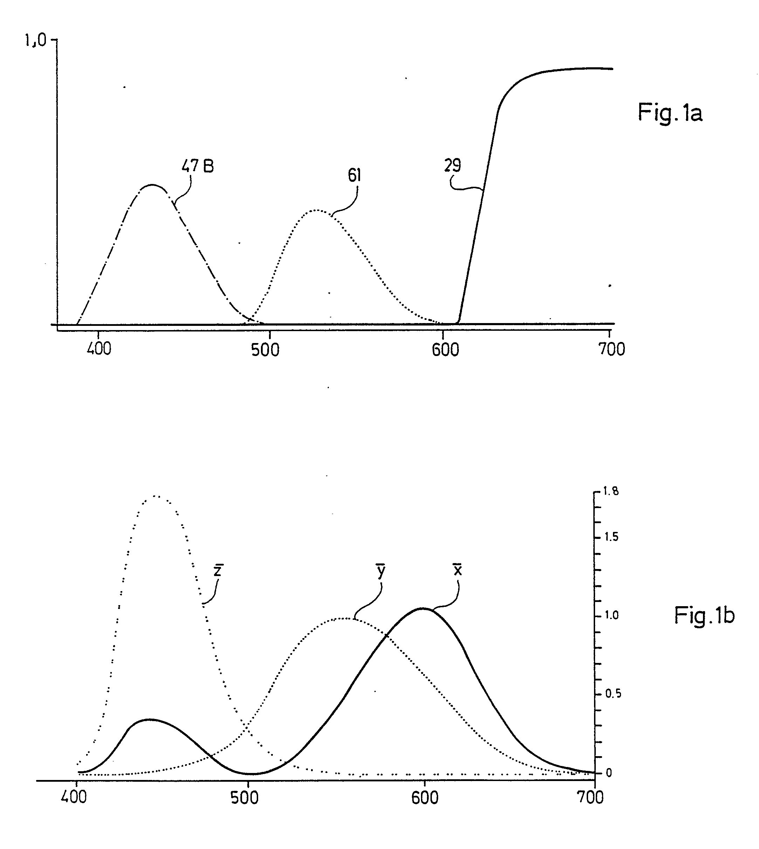

Fig. 1b) stellt die Normspektralwertkurven $2°$ $\bar{X}$, $\bar{Y}$ und $\bar{Z}$ für das Dreibereichsverfahren nach DIN 5033, Teil 6 dar, die ebenfalls mit entsprechenden Filtern in einem farbmetrischen Meßkopf realisiert werden können.

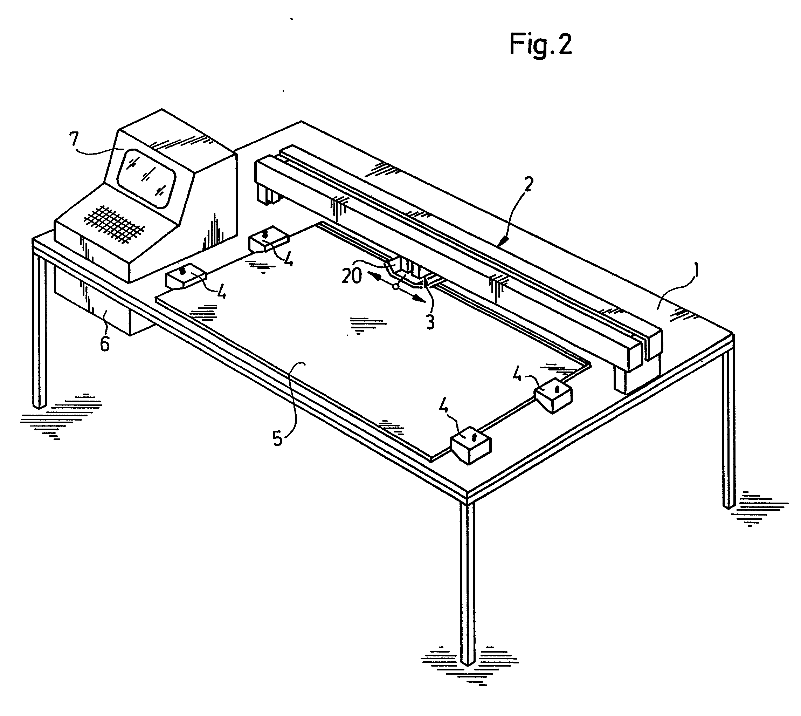

Die in Fig. 2 dargestellte Vorrichtung umfaßt einen Meßtisch 1 und auf diesem eine Meßbrücke 2 mit einem Meßwagen 3, vier Klemmblöcke 4 zum Festhalten eines auszumessenden Druckbogens 5, einen Elektronikteil 6 und einen Personal-Computer 7. Die Platte des Tischs 1 weist unter einer obersten Deckschicht eine Stahlblechschicht auf, die es erlaubt, den Druckbogen 5 mittels Magneten oder dergleichen festzuhalten. Der mit einem integrierten Bildschirm-Terminal versehene Personal-Computer 7 ist drehbar auf dem Tisch befestigt. Der Meßwagen 3, der Elektronikteil 6 und der Personal-Computer 7 sind über nicht gezeigte Leitungen verbunden.

Der Elektronikteil 6 umfaßt ein Mikroprozessorsystem und Schnittstellen zur Aufbereitung der ihm zugeführten sowie der von ihm erzeugten Meß- und Steuersignale. Das Mikroprozessorsystem im Elektronikteil arbeitet mit dem Personal-Computer 7 im sogenannten Master-Slave-Betrieb zusammen, wobei der Personal-Computer die Kontrollfunktion hat und die Auswertung der gemessenen und eingegebenen Daten vornimmt, während das System im Elektronikteil für die Ausführung der Messungen und der Bewegungen des Meßwagens zuständig ist.

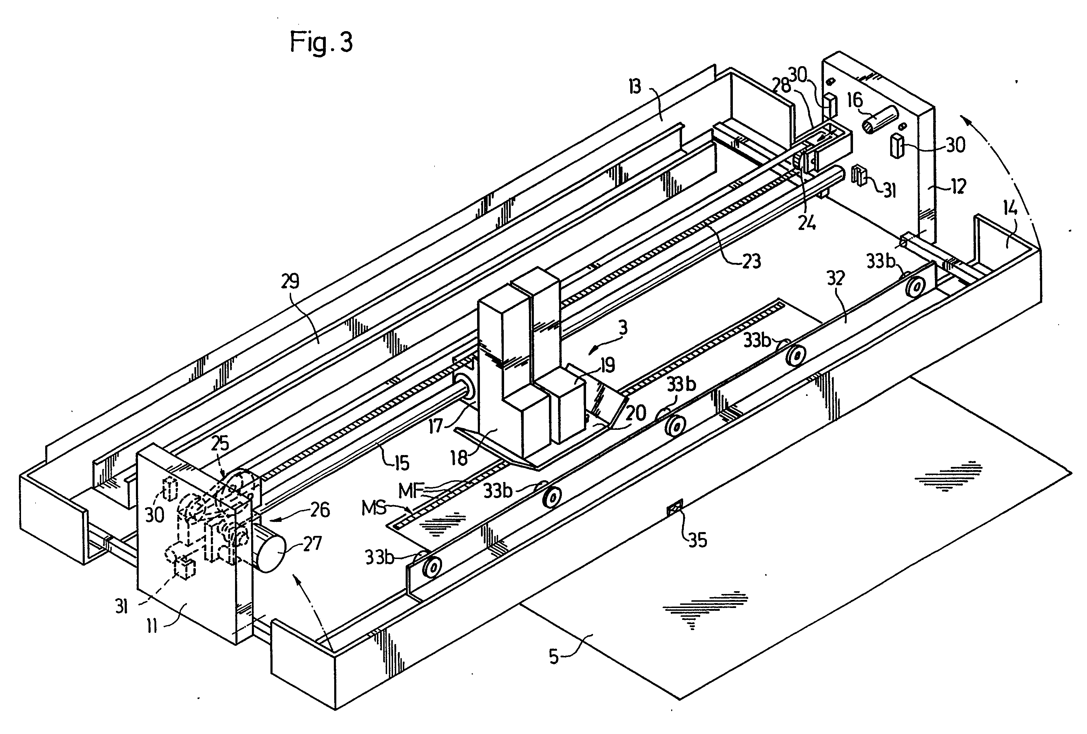

In Fig. 3 ist die Meßbrücke 2 größer dargestellt. Sie umfaßt zwei vertikale Seitenteile 11 und 12, die die übrigen Teile der Brücke tragen, sowie zwei Abdeckhauben 13 und 14, die den Zwischenraum zwischen den beiden Seitenteilen überdachen und an diesen schwenkbar gelagert sind, so daß sie in die in Fig. 3 dargestellte Lage auseinandergeklappt werden können und den Zugang zu den inneren Teilen der Meßbrücke freigeben. Die beiden Seitenteile 11 und 12 sind durch eine Führungswelle 15 und eine nur andeutungsweise dargestellte Verbindungsstange 16 miteinander verbunden.

Auf der Führungswelle 15 ist der als Ganzes mit 3 bezeichnete Meßwagen hin- und herbeweglich sowie um die Welle schwenkbar geführt. Der Meßwagen 3 besteht aus einem mit zwei Kugelbüchsen versehenen Führungsblock 17 und zwei an diesem befestigten Meßköpfen 18 und 19 sowie einem beidseits nach oben abgewinkelten Leit- oder Niederhalteblech 20. An der Unterseite ist der Meßwagen mit nicht dargestellten Rollen versehen. Im Betrieb stützt sich der Meßwagen auf dem auszumessenden Druckbogen 5 ab, wodurch der Abstand zwischen den Meßköpfen 18 und 19 und den einzelnen Feldern MF des am Druckbogen 5 befindlichen Meßstreifens MS stets konstant ist. Der Meßkopf 18 ist ein Farbdichtemeßkopf mit beispielsweise den in Fig. 1a) dargestellten spektralen Empfindlichkeitskurven. Der Meßkopf 19 ist für eine farbmetrische Messung gemäß Fig. 1b) ausgelegt.

Zum Antrieb des Meßwagens 3 ist ein Zahnriemen 23 vorgesehen, der über zwei an je einem der Seitenteile 11 und 12 drehbar gelagerte Rollen oder Walzen 24 und 25 geführt und an dessen unterem Trum der Führungsblock 17 befestigt ist. Die in der Fig. 3 linke Walze 25 ist über ein nur gestrichelt angedeutetes Zahnriemen-Untersetzungsgetriebe 26 von einem Schrittmotor 27 angetrieben. Die andere Walze 24 ist in einer Spannvorrichtung 28 frei drehbar gelagert. Schrittmotor 27 und Getriebe 26 sind so bemessen, daß der Zahnriemen 23 und damit der Meßwagen 3 pro vollständigem Motor-Schritt um 0,1 mm weitertranportiert wird.

In der hinteren Abdeckhaube 13 ist ein Führungsprofil 29 angeordnet, in welchem die nicht dargestellte elektrische Flachleiter-Verbindung des Meßwagens 3 mit dem Elektronikteil 6 verläuft. An den Seitenteilen 11 und 12 sind ferner noch durch Blöcke 30 angedeutete Schnellverschlüsse zum Fixieren der beiden Abdeckhauben 13 und 14 in der hochgeklappten geschlossenen Stellung sowie je eine Gabellichtschranke 31 angeordnet, welche mit einem nicht dargestellten Blechstreifen o. ä. am Führungsblock 17 bzw. Meßwagen 3 derart zusammenwirkt, daß der Meßwagen automatisch angehalten wird, wenn er dem einen oder dem anderen Seitenteil z. B. infolge eines Steuerungsfehlers näher als eine bestimmte Mindestdistanz kommt.

In der vorderen Abdeckhaube 14 ist eine im Querschnitt U-förmige Halterung 32 befestigt, in welcher fünf gleichmäßig über die Länge der Meßbrücke verteilte Markierungslampen angeordnet sind. Diese Lampen bestehen je aus einer Lichtquelle in Form einer sogenannten Strichlampe (in Fig. 3 nicht sichtbar) im oberen Schenkel der Halterung und einer Projektionsoptik 33 im unteren Halterungsschenkel und erzeugen auf dem Druckbogen 5 fünf in einer Linie liegende Markierungslichtstriche von je etwa 20 mm Länge. Die Lichtstriche dienen zur Ausrichtung des Druckbogens 5 derart, daß der Meßstreifen MS exakt unter der Bewegungsbahn der beiden Meßköpfe 18 und 19 zu liegen kommt.

Schließlich ist auf der Oberseite der vorderen Abdeckung 14 noch eine Schaltwippe 35 vorgesehen, mittels welcher der Meßwagen 3 mauell gesteuert in die gewünschte Meßposition längs des Meßstreifens MS gefahren werden kann.

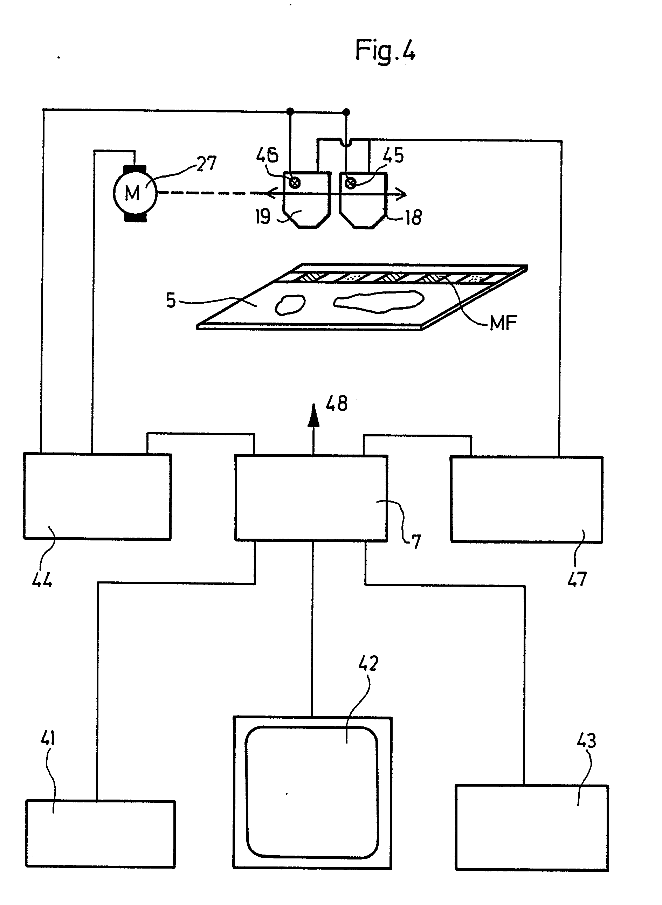

Fig. 4 zeigt als Blockschaltbild ein Ausführungsbeispiel, bei welchem die Meßköpfe 18, 19 gemeinsam von dem Schrittmotor 27 bewegbar sind. Wie bereits im Zusammenhang mit Fig. 2 dargestellt, wird von einem Personal-Computer 7 der gesamte Ablauf der Messung und der Meßwerterfassung gesteuert. Dazu ist in an sich bekannter Weise der Personal-Computer 7 mit einer Tastatur 41, einem Monitor 42 und einem Drucker 43 verbunden. Ferner ist ein Ausgang des Personal-Computers 7 an eine Steuereinheit 44 angeschlossen, welche den Schrittmotor 27 steuert sowie die Speisung der in den Meßköpfen 18, 19 enthaltenen Lampen 45, 46 vornimmt.

Die Ausgangssignale der Meßköpfe werden einer Signalverarbeitungseinrichtung 47 zugeführt. Die damit erfaßten Dichtewerte und/oder Normfarbwerte werden dem Personal-Computer 7 zur weiteren Verarbeitung zugeführt. Am Ausgang 48 des Personal-Computers 7 stehen dann Steuerdaten für eine nicht dargestellte Druckmaschine zur Verfügung.

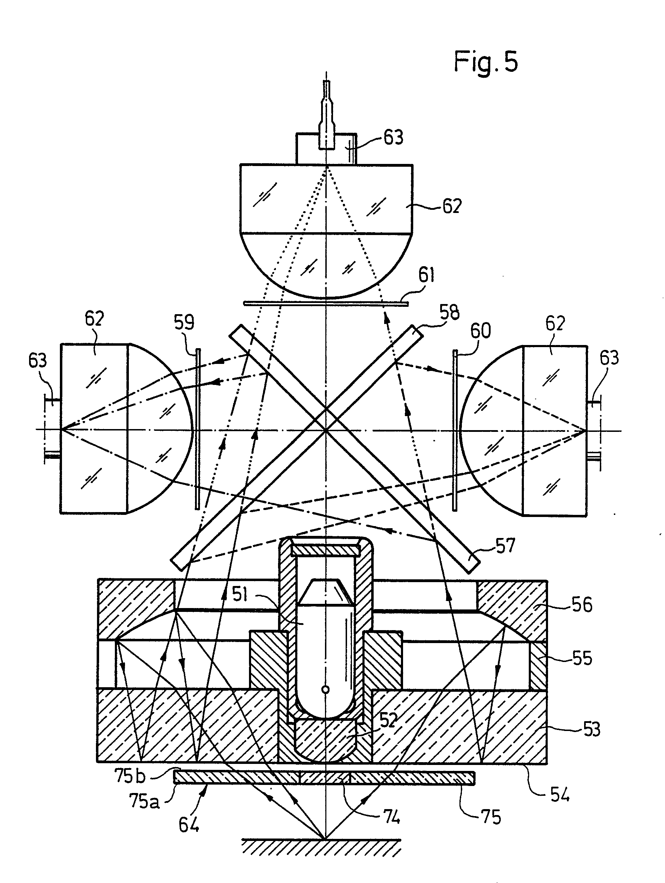

Fig. 5 stellt einen aus der europäischen Patentanmeldung 0 065 484 bekannten Meßkopf für die densitometrische Messung dar, der für die erfindungsgemäße Vorrichtung in vorteilhafter Weise geeignet ist. Das von einer Lampe 51 ausgehende Licht beaufschlagt das Meßobjekt unter 90°. Das von diesem remittierte Licht wird unter 45° mittels einer Ringspiegel-Optik 53 bis 56 gesammelt und mittels zweier farbselektiver Interferenzspiegel 57, 58 in die drei Farbanteile Blau, Rot und Grün aufgespalten. Die drei Farbanteile gelangen dann über weitere Filter 59 bis 61 und je einen Aplanaten 62 auf je eine Siliziumplanar-Fotodiode 63. Zur Ausblendung des von der Oberfläche des Meßobjekts direkt reflektierten Lichts sind zwei gekreuzte Linearpolarisatoren 74a, 75a in den Strahlengang eingefügt. Um Schwierigkeiten mit den auf die Polarisationsrichtung der sie beaufschlagenden Lichts empfindlichen Interferenzspiegeln 57, 58 zu vermeiden, ist der im Abbildungsstrahlengang befindliche Linearpolarisator 75a auf seiner Rückseite mit einer Lambda/4-Schicht 75b bedampft, welche eine Zirkularpolarisation des den Spiegeln 57, 58 zugeführten Lichts bewirkt.

**Ansprüche**

1. Vorrichtung zur Farbmessung für den Offsetdruck, wobei an einer eine auszumessende Vorlage überspannenden Brücke eine Farbmeßeinrichtung beweglich angeordnet ist, dadurch gekennzeichnet, daß die Farbmeßeinrichtung einen Dreifarben-Simultan-Meßkopf für die densitometrische Messung und einen weiteren Dreifarben-Simultan-Meßkopf für die farbmetrische Messung umfaßt.

2. Vorrichtung zur Farbmessung für den Offsetdruck, wobei an einer eine auszumessende Vorlage überspannenden Brücke eine Farbmeßeinrichtung beweglich angeordnet ist, dadurch gekennzeichnet, daß die Farbmeßeinrichtung einen Simultan-Meßkopf umfaßt mit sechs opto-elektrischen Wandlern, in deren Strahlengängen drei Farbfilter für die densitometrische und drei weitere Farbfilter für die farbmetrische Messung angeordnet sind.

Fig.1a

Fig.1b

# Fig.2

EP 0 357 986 A2

Fig. 3

EP 0 357 986 A2

# Fig.4

Fig. 5